# EUROPÄISCHE PATENTSCHRIFT

(11) **EP 1 237 260 B1**
(45) Veröffentlichungstag und Bekanntmachung des Hinweises auf die Patenterteilung: **05.09.2012**
(21) Anmeldenummer: 02003430.2
(22) Anmeldetag: 14.02.2002
(51) Int. Cl.: H02K 11/04, H02K 5/22

(54) **Umrichtermotor und eine Baureihe von Antrieben**
Converter-motor and drive system series
Moteur à convertisseur et gamme de système d'entraînement

(30) Priorität: 01.03.2001 DE 10109797
(43) Veröffentlichungstag der Anmeldung: 04.09.2002
(73) Patentinhaber: SEW-EURODRIVE GmbH & Co. KG, 76646 Bruchsal (DE)
(72) Erfinder: Huber, Martin, 77830 Bühlertal (DE)

(56) Entgegenhaltungen:
- EP-A- 0 190 602
- DE-A- 19 704 226
- DE-C- 899 225
- US-A- 5 223 671

## Beschreibung

Die Erfindung betrifft einen Umrichtermotor.

Aus der DE 197 04 226 A1 ist ein Umrichtermotor bekannt, bei dem ein Umrichter über ein Zwischenteil mit dem Motor verbunden ist und somit eine bauliche Einheit bildet. Dabei überragt der Kühlkörper des Umrichters das quaderförmige, motorseitig entsprechend dem Motorgehäuse geformten Zwischenteil B-seitig, also in der vom Rotor abgewandten Richtung. Das Zwischenteil weist Ausnehmungen auf, die zur Durchleitung für elektrische Kabel geeignet sind Diese Ausnehmungen sind nicht A-seitig oder B-seitig sondern in den quergerichteten Wänden vorgesehen. Nachteilig ist dabei, dass eine Montage bei denjenigen mechanischen Anlagen erschwert oder verhindert ist, bei welchen in der Querrichtung, also nicht A-seitig und B-seitig kein oder zu wenig Platz für Kabel vorhanden ist.

Aus der EP 0 190 602 A1 ist ein Ständergehäuse für eine oberflächengekühlte Maschine bekannt, bei der die zwischen Rippensegmenten liegende Gehäuseteile als offene Kanäle ausgebildet und wenigstens auf einem Teil ihrer Länge als verschließbare ebene Anschlussflansche für einen Klemmenkasten ausgestaltet sind, so dass die Flanschebenen zu den Rippenkanten der benachbarten Rippensegmente einen Abstand haben

Aus der DE 899 225 C ist ein Klemmenkasten für elektrische Maschinen bekannt, bei dem eine gegebenenfalls mit einem Deckel versehene Haube mittels eines Randflansches in einem zur Befestigung dienenden Flanschring drehbar angeordnet ist.

Der Erfindung liegt daher die Aufgabe zugrunde, einen Umrichtermotor hoher Flexibilität in kostengünstiger Weise weiterzubilden.

Erfindungsgemäß wird die Aufgabe bei dem Umrichtermotor nach den in Anspruch 1 und 2 angegebenen Merkmalen gelöst.

Wesentliche Merkmale der Erfindung bei dem Umrichtermotor sind, dass der Umrichtermotor einen Motor, mindestens ein Zwischenteil und einen Umrichter umfasst, wobei der Umrichter, Signalelektronik, Leistungselektronik und mindestens einen Kühlkörper umfasst, und wobei der Umrichter mindestens über das Zwischenteil mit dem Motor mechanisch verbunden ist, wobei der Umrichter ein erstes Steckverbinderteil aufweist zur Verbindung mit einem weiteren Steckverbinderteil, das elektrisch mit den Statorwicklungen des Motors verbindbar ist, und wobei das Zwischenteil mindestens in einer ersten Richtung orientierte Ausnehmungen zur Durchleitung von elektrischen Leitungen umfasst, und wobei die mechanische Schnittstelle zwischen Motor und Zwischenteil und zwischen Zwischenteil und Umrichter so gestaltet ist, dass das Zwischenteil mit seinen Ausnehmungen jeweils in mindestens zwei Orientierungen montierbar ist.

Wichtige Merkmale der Erfindung bei dem Umrichtermotor sind alternativ, dass der Umrichtermotor einen Motor, mindestens ein Zwischenteil, eine Bodenplatte und einen Umrichter umfasst, wobei der Umrichter Signalelektronik, Leistungselektronik und mindestens einen Kühlkörper umfasst, und die Bodenplatte zur Aufnahme verschiedener elektrischer und/oder elektronischer Optionen ausgeführt ist, und wobei der Umrichter mindestens über das Zwischenteil und die Bodenplatte mit dem Motor mechanisch verbunden ist, und wobei das Zwischenteil mindestens in einer ersten Richtung orientierte Ausnehmungen zur Durchleitung von elektrischen Leitungen umfasst, und wobei die Bodenplatte zum Zwischenteil hin eine Schnittstelle aufweist, die eine andere Drehsymmetrie aufweist als die ebenfalls von der Bodenplatte umfasste Schnittstelle zum Motor hin, und das Zwischenteil mit seinen Ausnehmungen auf der Bodenplatte in mindestens zwei verschiedenen Orientierungen montierbar ist.

Von Vorteil ist dabei, dass für verschiedene Anwendungen und Einbaugegebenheiten die Kabelführung kostengünstig in die geeignetste Richtung legbar und ausführbar ist. Gleichzeitig ist die Lösung sehr kostengünstig, weil einerseits mindestens Motor, Umrichter und Zwischenteil mehrfach verwendbar sind und andererseits der Umrichtermotor flexibel anpassbar ist. Außerdem ist besonders vorteilhaft, dass Ausnehmungen an sogar nur einer Seite des Zwischenteils für verschiedene Richtungen der Kabelführung ausreichen. Bei der Fertigung der Ausnehmungen muss also nur diese Seite zum Herstellen der Ausnehmungen bearbeitet werden. Dies ist vorteiligerweise in einer einzigen Aufspannung ausführbar. Somit ist die Fertigung besonders einfach und kostengünstig. Durch die mehrfache Verwendbarkeit sind auch die Lagerkosten, Fertigungskosten und weitere Kosten erheblich reduzierbar.

Bei einer vorteilhaften Ausgestaltung ist die erste Richtung eine Querrichtung, insbesondere quer zur Rotorachse, oder eine Längsrichtung, insbesondere in Rotorachsenrichtung. Von Vorteil ist dabei, dass der Umrichtermotor verwendbar ist bei Anwendungen, die nur B-seitig genügend Platz für Kabel erlauben, oder bei anderen Anwendungen, die nur in einer Querrichtung genügend Platz für Kabel erlauben.

Bei einer vorteilhaften Ausgestaltung gehen die herstellbaren Orientierungen, in welchen das Zwischenteil montierbar ist, mittels einer diskreten oder kontinuierlichen Drehung ineinander über und/oder sind ineinander überführbar. Von Vorteil ist dabei, dass bei der Montage eine einfache Drehung, insbesondere bei manueller Fertigung ein sehr einfacher Handgriff, notwendig ist, der kostengünstig ausführbar ist

Bei einer vorteilhaften Ausgestaltung ist das Zwischenteil mindestens an seiner motorseitigen und umrichterseitigen Schnittstelle quadratisch ausgebildet. Von Vorteil ist dabei, dass Fehler bezüglich falscher Ausrichtung bei der Montage vermindert sind, da nur bei korrekt aufgesetztem Zwischenteil die Verbindung herstellbar ist.

Bei einer vorteilhaften Ausgestaltung ist das Zwischenteil motorseitig und umrichterseitig kreisrund ausgebildet. Von Vorteil ist dabei, dass beliebige Richtungen für die Ausnehmungen und damit für die Kabelzuführung realisierbar sind. Somit ist die Flexibilität besonders erhöht

Bei einer vorteilhaften Ausgestaltung ist die mechanische Schnittstelle des Umrichters zum Zwischenteil und das Zwischenteil rechteckig ausgebildet und zum Motor hin eine über mindestens eine Bodenplatte mit dem Klemmenkastenansatz des Motors verbindbar. Von Vorteil ist dabei, dass sogar ein Umrichter, der eine rechteckige mechanische Schnittstelle aufweist an einen Motor mit quadratischer mechanischer Schnittstelle verbindbar ist.

Bei einer vorteilhaften Ausgestaltung überragt das mindestens einen Kühlkörper umfassende Gehäuse des Umrichters das Zwischenteil mindestens A-seitig. Von Vorteil ist dabei, dass bei vielen Anwendungen zwar A-seitig Raum für den überragenden Umrichter vorhanden ist, aber B-seitig nicht. Umrichtermotoren, deren Umrichter die B-seitig entsprechend, insbesondere mit Kühlkörper, wesentlich überragen, wären also nicht einsetzbar.

Bei einer vorteilhaften Ausgestaltung weist der Motor einen Klemmenkastenansatz zur mechanischen Verbindung mit dem Zwischenteil auf, insbesondere einen Klemmenkastenansatz der entsprechend dem Zwischenteil geformt ist. Von Vorteil ist dabei, dass somit eine mechanische Schnittstelle geschaffen ist, die sogar für eine Baureihe verwendbar ist.

Bei einer vorteilhaften Ausgestaltung weist der Umrichter ein erstes Steckverbinderteil zur Verbindung mit einem weiteren Steckverbinderteil, insbesondere im Bereich des Motors, Klemmenkastenansatzes oder Zwischenteils, auf, das elektrisch mit den Statorwicklungen des Motors verbindbar ist. Von Vorteil ist dabei, dass Motor und Umrichter schnell und einfach mechanisch und elektrisch trennbar und verbindbar sind.

Bei einer vorteilhaften Ausgestaltung ist das weitere Steckverbinderteil auf einer Adapterplatte montiert, für die zumindest das Zwischenteil Gehäusefunktion ausführt und/oder die im Inneren des Zwischenteils angeordnet ist. Von Vorteil ist dabei, dass die Adapterplatte schnell, einfach und kostengünstig austauschbar ist oder bei Montage wählbar ist. Somit sind Umrichtermotoren mit verschiedenen Optionen einfach realisierbar. Beispielsweise ist die Adapterplatte versehbar mit einer elektronischen Schaltung, die die Funktion Bremsgleichrichter, Motorschalter oder Sanftanlauf realisiert.

Bei einer vorteilhaften Ausgestaltung sind die Ausnehmungen des Zwischenteils derart geformt, dass mindestens ein Steckverbinderteil in einer solchen Ausnehmung des Zwischenteils montierbar ist und somit die elektrischen Leitungen zu den weiteren Vorrichtungen mittels dieses Steckverbinderteils am Zwischenteil zusammenführbar und trennbar sind. Von Vorteil ist dabei, dass ein elektrisches Abtrennen der Versorgungsleitungen und auch der optionalen Signalleitungen einfach, schnell und kostengünstig realisierbar ist.

Bei einer vorteilhaften Ausgestaltung erfolgt das Wärmeableiten der von der Signal- oder Leistungselektronik erzeugten Wärme an die Umgebung über eine oder mehrere Komponenten, insbesondere über Materialien mit einem geringen spezifischen Wärmewiderstand, wobei mindestens eine Komponente ein elektrischer Isolator ist. Insbesondere ist von der Leistungselektronik zur Signalelektronik ein höherer Wärmewiderstand als von der Leistungselektronik zur Umgebung vorhanden und/oder dass von der Leistungselektronik zur Signalelektronik ein höherer Wärmewiderstand als von der Signalelektronik zur Umgebung vorhanden ist. Von Vorteil ist dabei, dass zwei Funktionen, also Isolieren und Wärmeleiten, mit einem Material ausführbar sind und somit der Umrichtermotor äußerst kostengünstig ausführbar ist.

Bei einer vorteilhaften Ausgestaltung erfolgt das Wärmeleiten über eine oder mehrere Komponenten, wobei mindestens eine Komponente ein Gas, wie Luft oder dergleichen, ist und/oder dass die Wärmeleitung über dieses Gas mittels Betreiben eines Lüfters verbesserbar ist. Von Vorteil ist dabei, dass ein Gas, das ein Isolator ist und sogar einen niedrigen spezifischen Wärmeleitwert hat, zum Wärmeleiten und Isolieren verwendbar ist, indem im Wesentlichen mittels der Strömung Wärme transportiert wird.

Bei einer vorteilhaften Ausgestaltung umfasst mindestens ein Kühlkörper Kühlrippen und/oder Kühlfinger. Von Vorteil ist dabei, dass je nach Anwendung sowohl leistungsfähige Kühlrippen als auch im Wesentlichen in alle Richtungen gleichmäßig arbeitende Kühlfinger verwendbar sind.

Bei einer vorteilhaften Ausgestaltung ist der Umrichtermotor derart ausgeführt, dass vom Stator des Motors ein niedrigerer Wärmewiderstand zur Umgebung vorhanden ist als vom Stator des Motors zur Leistungs- und Signalelektronik. Von Vorteil ist dabei, dass die Leistungs- und Signalelektronik nicht belastet wird von der Wärmeleistung des Motors.

Bei einer vorteilhaften Ausgestaltung ist im Klemmenkastenansatz und/oder im Zwischenteil eine Wärmesperre montierbar, die Strahlungswärmeleitung und/oder konvektive Wärmeleitung vermindert. Von Vorteil ist dabei, dass das Zwischenteil kompakt ausführbar ist und somit der Umrichter in relativ geringer Entfernung vom Motor einsetzbar ist. Somit ist der gesamte Umrichtermotor kompakt ausführbar trotz der hohen vom Stator und vom Umrichter stammenden Wärmeleistung.

Bei einer vorteilhaften Ausgestaltung ist die Adapterplatte als Wärmesperre ausgeführt. Von Vorteil ist dabei, dass keine spezielle zusätzliche Komponente als Wärmesperre zu verwenden ist, sondern die Materialwahl und/oder Ausführung der Adapterplatte die Funktion der Wärmesperre erfüllt.

Bei einer vorteilhaften Ausgestaltung ist von der Adapterplatte aus betrachtet, motorseitig und/oder umrichterseitig mindestens eine Wärmesperre vorgesehen, insbesondere innerhalb des Zwischenteils und/oder Klemmenkastenansatzes. Von Vorteil ist dabei, dass weitere Wärmesperren überraschenderweise eine noch kompaktere Ausführung des Umrichtermotors ausführbar machen, da sich herausgestellt hat, dass für den Umrichter bei leistungsfähigeren Wärmesperren ein geringerer Abstand zum Motor erforderlich ist.

Bei einer vorteilhaften Ausgestaltung weist die Schnittstelle vom Zwischenteil zum Umrichter hin eine andere diskrete Drehsymmetrie auf als die mindestens eine Bodenplatte umfassende Schnittstelle vom Zwischenteil zum Motor hin. Von Vorteil ist dabei, dass Umrichter mit Motoren nicht nur verbindbar sind, obwohl sie verschiedene Gehäuse und Gehäusesymmetrien aufweisen, sondern auch die Leitungen an verschiedenen Seiten des Zwischenteils mittels verdrehter Montage herausführbar sind.

Bei einer vorteilhaften Ausgestaltung ist das Zwischenteil mit dem Umrichter über eine Adapterplatte verbindbar und/oder das Zwischenteil ist mit dem Motor über eine als Adapterplatte wirkende Bodenplatte verbindbar. Von Vorteil ist dabei, dass diese Platten derart ausformbar sind, dass sie mit Steckverbindern und/oder elektrischen und/oder elektronischen Baugruppen bestückbar sind. Außerdem sind mittels entweder der Bodenplatte oder der Adapterplatte zwei Schnittstellen ausführbar in einer dieser Platten ausführbar, wodurch dann verschiedendrehsymmetrische Gehäuse von Umrichter und Motor beziehungsweise Zwischenteil verbindbar sind.

Bei einer vorteilhaften Ausgestaltung umfasst die Adapterplatte elektronische Baugruppen und/oder einen Steckverbinder zur elektrischen Verbindung mit dem Umrichter und/oder die Bodenplatte ist zur Aufnahme verschiedener elektrischer und/oder elektronischer Optionen ausgeführt oder innerhalb einer Baugröße einer Baureihe von Umrichtermotoren auswählbar. Von Vorteil ist dabei, dass der Umrichter schnell, einfach und leicht lösbar verbindbar ist und innerhalb einer Baugröße innerhalb der Baureihe von Umrichtermotoren mittels Austausch der Adapterplatten verschiedene Bestückungen und/oder Optionen erreichbar sind. Somit wird eine hohe Variantenvielfalt mittels einer geringen Teilevielfalt erreichbar.

Bei einer vorteilhaften Ausgestaltung weist die Bodenplatte zum Zwischenteil hin eine Schnittstelle auf, die eine andere Drehsymmetrie aufweist als die ebenfalls von der Bodenplatte umfasste Schnittstelle zum Motor hin. Von Vorteil ist dabei, dass mittels einer dünn ausführbaren Bodenplatte eine mechanische Schnittstellenumsetzung erreichbar ist und auf diese Weise verschieden verdrehsymmetrische Zwischenteile und Motoren derart lösbar verbindbar sind, dass bei der Montage unter Verdrehen verschiedene Bauformen des Umrichtermotors erreichbar sind..

Von Vorteil ist, dass derselbe Motor mit verschiedenen Vorrichtungen, wie Zwischenteil, Motoranschlusskasten oder weiteren Aufsätzen zu einem Antrieb für verschiedenste Einsatzzwecke herstellbar ist unter äußerst geringen Kosten. Insbesondere sind die Lager- und Fertigungskosten durch die Mehrfachverwendung reduziert. Weitere Erhöhung der Flexibilität ist durch die verschiedenartig möglichen Orientierungen der Vorrichtungen, wie Zwischenteil, Motoranschlusskasten oder weitere Aufsätze, erreicht. Ursache dafür ist die definierte Schnittstelle am Motor und diesen Vorrichtungen, wobei die Vorrichtungen und der Motor an ihren Schnittstellen dieselbe Drehsymmetrie aufweisen. Wesentlicher Vorteil ist auch, dass ein in der Anlage montierter Motor mit Motoranschlusskasten in einfacher und kostengünstiger Weise durch Auswechseln des Motoranschlusskastens in einen Umrichtermotor verwandelbar ist. Somit ist eine Anlage nachrüstbar oder die funktionale Potenz des Antriebs optimierbar.

Bei einer vorteilhaften Ausgestaltung wird eine **dritte Variante** als Motor mit auf den Klemmenkastenansatz montierbarem Aufsatz ausgeführt, der nur eine elektrische und/oder elektronische Schaltung zur Ausführung mindestens einer Funktion umfasst. Von Vorteil ist dabei, dass beispielsweise ein Motorschalter, ein Gleichrichter für eine Gleichstrombremse, eine Temperaturüberwachung oder dergleichen, im Aufsatz vorsehbar ist. Also ist der Motor mit einer solchen Funktion ausstattbar, wobei der Motor bis zum Klemmenkastenansatz aus der Baureihe auswählbar ist und der Aufsatz entsprechend der gewünschten Funktion auswählbar ist. Somit ist auch im Bereich der elektrischen und elektronischen Funktionen ein Baukastenprinzip geschaffen und eine Reduzierung der Teile und Kosten erreichbar.

Bei einer vorteilhaften Ausgestaltung unterscheiden sich eine oder mehrere, weitere Varianten von der dritten Variante jeweils in einer um einen Winkelbetrag gedrehten Montage des Aufsatzes unterscheiden. Von Vorteil ist dabei wiederum, dass je nach den Anforderungen der Anlage ohne Mehraufwand die Kabeldurchführungen in der gewünschten und geeigneten Orientierung erfolgen kann.

Bei einer vorteilhaften Ausgestaltung ist die Funktion eine Motorschalterfunktion, ein Sanftanlaufen, ein Bremsgleichrichter und/oder eine an verschiedenen Netzspannungen betreibbare elektronische Schaltung. Von Vorteil ist dabei, dass die Baureihe eine große Vielfalt von Funktionen bietet, die an die jeweilige Anwendung anpassbar ist. Des Weiteren ist beispielsweise ein in der Anlage erfindungsgemäßer Umrichtermotor in einen Motor mit Motoranschlusskasten oder in einen Motor mit Aufsatz zur Ausführung genannter Funktionen veränderbar. Insbesondere ist ein Umrichtermotor gegen einen Motor mit kostengünstigerem Aufsatz mit Sanftanlauf austauschbar, wenn beispielsweise erkannt wurde, dass die funktionale Potenz oder gesamte Funktionenpalette des Umrichters bei der Anwendung gar nicht nötig ist sondern nur das sanfte Anlaufen des Antriebs.

Weitere vorteilhafte Ausgestaltungen ergeben sich aus den Unteransprüchen.

Die Erfindung wird nun anhand von Abbildungen näher erläutert:

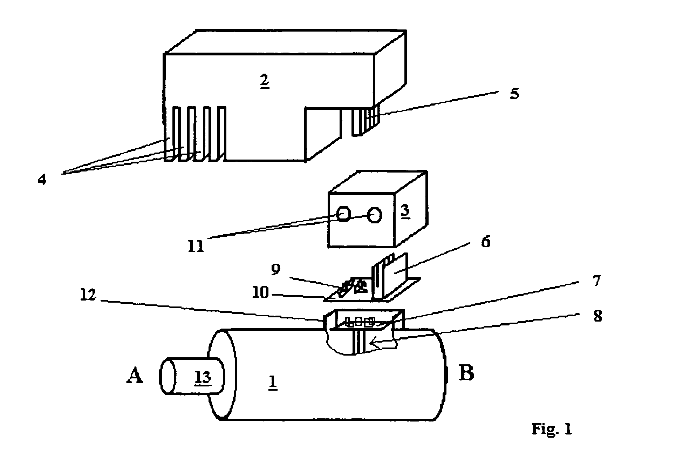

In der Figur 1 ist eine schematische Explosionszeichnung für ein erfindungsgemäßes Ausführungsbeispiel des Umrichtermotors gezeigt. Er umfasst einen Motor 1, der in seinem Inneren einen Stator umfasst und zum Ableiten des mechanischen Drehmoments an eine angetriebene mechanische Vorrichtung, wie beispielsweise ein Getriebe, einen A-seitigen Rotor 13 aufweist. A-seitig ist auch ein Flansch vorhanden zum mechanischen Verbinden mit einer mechanischen Vorrichtung. B-seitig umfasst der Motor 1 in weiteren erfindungsgemäßen Ausführungsbeispielen eine Bremse und/oder einen Lüfter.

Das Gehäuse des Motors 1 weist einen, in der Figur 1 nur angedeuteten quadratischen Klemmenkastenansatz 12 auf. Dieser Klemmenkastenansatz stellt eine Öffnung des Motorgehäuses zum Anschluss der elektrischen Leitungen 8 dar Die elektrischen Leitungen 8 umfassen die elektrischen Leitungen zu den Statorwicklungen und bei weiteren erfindungsgemäßen Ausführungsbeispielen weitere Leitungen, wie Leitungen zu einem Temperaturfühler und/oder einer Bremse Mindestens die elektrischen Leitungen der Statorwicklungen sind auf ein im Bereich des Motorgehäuses und/oder im Bereich des Klemmenkastenansatzes 12 montiertes Klemmbrett 7 geführt.

Auf den Klemmenkastenansatz 12 wird das entsprechend quadratisch geformte Zwischenteil 3 montiert, das in einer ersten Richtung orientierte Ausnehmungen 11 an einer Seitenwand zur Durchleitung von elektrischen Leitungen aufweist. Diese elektrischen Leitungen umfassen Versorgungsleitungen, insbesondere Starkstromkabel, und Signalleitungen.

Bei weiteren erfindungsgemäßen Ausführungsbeispielen weist das Zwischenteil 3 nicht nur die Ausnehmungen 11 an einer einzigen Seitenwand auf, sondern auch an weiteren Seitenwänden. Diese weiteren Ausnehmungen sind also in andere Richtungen orientiert Allerdings erhöht die Fertigung von weiteren Ausnehmungen die Kosten.

Auf der dem Motor 1abgewandten Seite des Zwischenteils 3 ist ein Umrichter 2 verbindbar, dessen Gehäuse ebenfalls dem Zwischenteil 3 entsprechend an der Verbindungsstelle, also der mechanischen Schnittstelle, zwischen Umrichter 2 und Zwischenteil 3 quadratisch geformt ist.

Das Zwischenteil 3 umgibt eine Adapterplatte 10 mit deren elektronischen Baugruppen. Das Zwischenteil 3 sitzt auf dem Rand der Adapterplatte auf und führt somit zumindest teilweise eine Gehäusefunktion für die Adapterplatte 10 aus Die Adapterplatte 10 trägt elektrische und/oder elektronische Baugruppen und eine Buchse 6 als zweites Steckverbinderteil zur elektrischen und mechanischen Verbindung mit einem als Stecker 5 ausgeführten ersten Steckverbinderteil des Umrichters 2. Die Adapterplatte 10 weist darüber hinaus elektrische Leitungen zum Klemmbrett 7 auf und elektrische Leitungen, die durch die Ausnehmungen 11 zu weiteren Vorrichtungen führen. Entsprechende Anschlusselemente weist die Adapterplatte 10 ebenfalls auf.

Bei weiteren erfindungsgemäßen Ausführungsbeispielen ist in Ausnehmungen 11 ein Steckverbinderteil einmontierbar, dessen von außen einsteckbares und entsprechend ausgeführtes (Gegen-) Steckverbinderteil mit den Leitungen zu den weiteren Vorrichtungen verbunden ist. Somit ist ein besonders schnelles Trennen und Schließen des Umrichtermotors ausführbar.

Die quadratische Ausführung der mechanischen Schnittstelle vom Zwischenteil zum Motor mit Klemmenkastenansatz und die ebenfalls quadratische Ausführung der mechanischen Schnittstelle vom Zwischenteil zum Umrichter ermöglichen, dass das Zwischenteil in einer um 90°, 180° oder 270° gedrehten Orientierung montierbar ist.

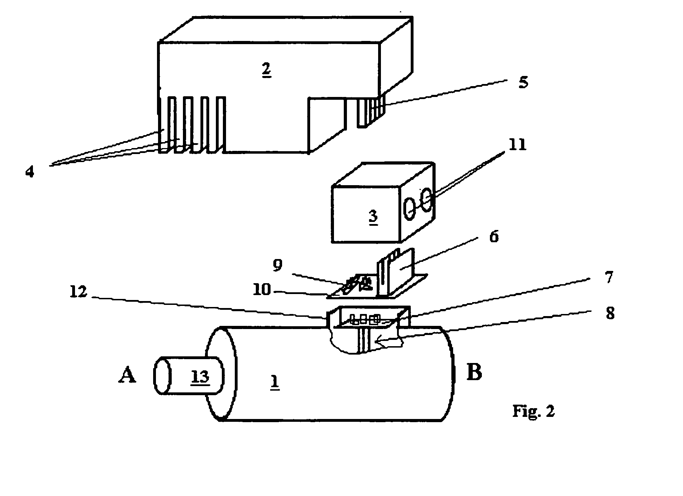

In der Figur 2 ist ein erfindungsgemäßes Ausführungsbeispiel gezeigt, das eine um 90° gedrehte Orientierung des Zwischenteils aufweist.

Bei Figur 1 und bei Figur 2 überragt der Umrichter A-seitig das Zwischenteil 3 und den Klemmenkastenansatz 12. Insbesondere ist ein Kühlkörper 4 des Umrichters 2 in diesem Bereich vorhanden. Wesentlicher Vorteil ist dabei , dass der Umrichtermotor bei Anwendungen einsetzbar ist, bei denen zwar A-seitig, insbesondere über dem Rotor, Platz frei ist, aber B-seitig kein Platz oder nur sehr wenig Platz vorhanden ist. Da der Raumbedarf des Umrichters, insbesondere wegen der notwendigen Abfuhr der Wärme der Leistungselektronik des Umrichters über Kühlkörper 4, erheblich ist, ermöglicht die erfindungsgemäße Ausführung viele neue Einsatzmöglichkeiten.

Insbesondere durch die verschiedenen montierbaren Orientierungen des Zwischenteils 3 wird der Umrichtermotor je nach Anwendung anpassbar. Beispielsweise ist B-seitig zwar kein Platz für den überragenden Teil des Umrichters, aber es ist noch genügend Platz für ein Herausführen der elektrischen Leitungen, insbesondere dicke Starkstromkabel. In diesem Fall ist der Umrichtermotor nach Figur 2 einsetzbar. Falls nur in der Querrichtung für dieses Herausführen von diesen elektrischen Leitungen vorhanden ist, ist der Umrichtermotor nach Figur 1 einsetzbar Unter Querrichtung ist eine senkrecht zur Rotorachse oder senkrecht zu einer mathematischen Verbindungslinie von der A-Seite zur B-Seite zu verstehen.

Bei weiteren erfindungsgemäßen Ausführungsbeispielen ist statt der beschriebenen quadratischen Ausführung der mechanischen Schnittstellen vom Zwischenteil 3 zum Umrichter 2 und Motor 1 eine runde Ausführung realisiert. Bei erfindungsgemäßen Ausführungsbeispielen ist allgemein eine Ausführung einsetzbar, bei der die Schnittstellen jeweils dieselbe diskrete oder kontinuierliche Drehsymmetrie zur selben Drehachse aufweisen. Es sind also auch gleichmäßige drei- oder vieleckige Ausführungen ausführbar. Die Drehachse ist dabei vorzugsweise eine mathematische fiktive Achse, die von gewissen Elementen oder Komponenten des Umrichters durch gewisse Elemente oder Komponenten des Motors führt.

Bei weiteren erfindungsgemäßen Ausführungsbeispielen ist die Adapterplatte 10 und das Klemmbrett 7 als eine bauliche Einheit ausgeführt.

Bei weiteren erfindungsgemäßen Ausführungsbeispielen ist die Buchse 6 und der Stecker 5 als erstes und zweites Steckverbinderteil derart ausgeführt, dass der Umrichter auch derart einsteckbar ist, dass er B-seitig statt A-seitig, wie in den Figuren gezeigt, überragt. Bei weiteren erfindungsgemäßen Ausführungsbeispielen ist erstes und zweites Steckverbinderteil derart ausgeführt, dass der Umrichter auch in anderen Orientierungen einsteckbar ist. Erstes und zweites Steckverbinderteil weisen dabei an ihren mechanischen und/oder elektrischen Schnittstellen wiederum die entsprechenden diskreten oder kontinuierlichen Drehsymmetrien auf. Insbesondere ist dabei keine Verpolung möglich. Auf diese Weise lassen sich erfindungsgemäße Umrichtermotoren bei einer Vielzahl neuer Anwendungen einsetzen

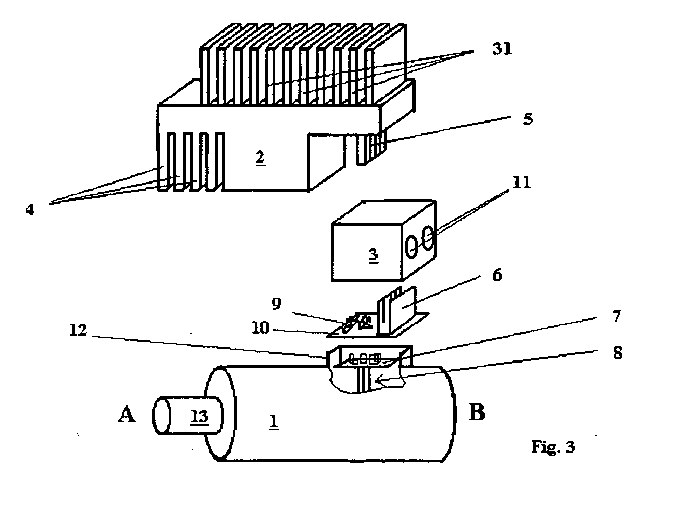

In der Figur 3 weist der Umrichter einen weiteren Kühlkörper 4 auf, der vom Motor 1 abgewandt orientiert ist. Bei weiteren erfindungsgemäßen Ausführungsbeispielen sind auch andere als die gezeigten Orientierungen ausführbar und/oder weitere Kühlkörper. Insbesondere sind Kühlkörper statt mit Kühlrippen ganz oder zumindest teilweise mit Kühlfingem ausgestattet Auf diese Weise ist eine konvektive Kühlung verbessert und die konvektive Kühlung ist in allen räumlichen Montage-Gesamtorientierungen ungefähr gleich.

Bei weiteren erfindungsgemäßen Ausführungsbeispielen ist die Adapterplatte 10 als Wärmesperre ausgeführt, die ein Eindringen der vom Stator oder Motorinneren des Motors 1 in den Bereich des Zwischenteils oder sogar in den Umrichter vermindert. Die Wärmesperre ist auch als eigenständige Komponente einfach oder mehrfach, motorseitig und /oder umrichterseitig von der Adapterplatte aus gesehen vorsehbar.

Bei weiteren erfindungsgemäßen Ausführungsbeispielen ist zwischen Signalelektronik und Leistungselektronik des Umrichters eine Wärmsperre vorgesehen. Bei weiteren erfindungsgemäßen Ausführungsbeispielen ist die Signalelektronik wärmeleitend mit mindestens einem speziellen Kühlkörperteil zur Ableitung von Wärme an die Umgebung verbunden, wobei dieses spezielle Kühlkörperteil zu mit der Leistungselektronik wärmeleitend verbundenen Kühlkörperteilen eine Wärmesperre, also auch einen hohen Wärmewiderstand, aufweist..

Wärmesperren sind entweder durch Materialien mit einem hohen spezifischen Wärmewiderstand ausführbar oder durch entsprechend geeignet gelenkte Strömungsfelder von Luft. Die Lenkung ist dabei über Lüfter oder dergleichen bewirkbar oder aber auch unter Verwendung konvektiver Strömungen, also durch geeignet bewirkte und verteilte Temperaturdifferenzen am und im Umrichtermotor

Bei weiteren erfindungsgemäßen Ausführungsbeispielen sind gemäß allgemeinen Sicherheitsvorschriften notwendige elektrische Isolierungen als Wärmesperren ausgeführt. Beispielsweise ist hierbei die isolierung zwischen Signai- und Leistungselektronik verwendbar oder auch die Adapterplatte 10.

Bei weiteren erfindungsgemäßen Ausführungsbeispielen stellt das erste und zweite Steckverbinderteil die einzige elektrische Schnittstelle des Umrichters 2 dar. Davon ausgenommen ist eine Erdungsverbindung, die auch bei Abmontieren und Abheben des Umrichters 2, also Herausziehen des Steckers 5 aus der Buchse 6, elektrisch vorgesehen ist. Bei weiteren erfindungsgemäßen Ausführungsbeispielen sind Kühlkörper ins Gehäuse des Umrichters 2 integriert, wobei für das Gehäuse ein Material mit geringen spezifischem Wärmewiderstand, also einem hohen spezifischen Wärmeleitwert verwendet wird.

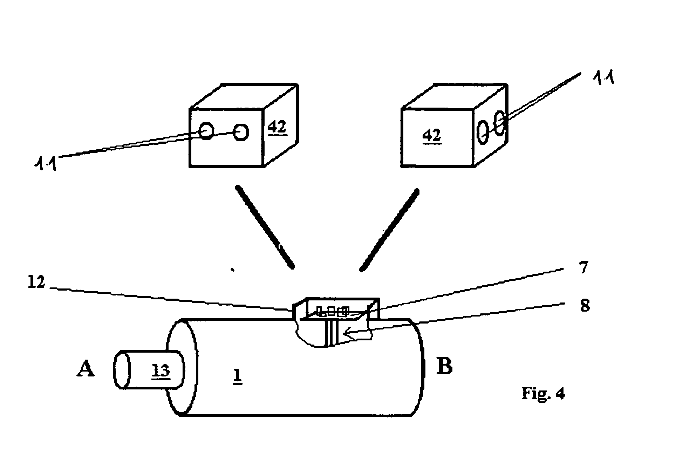

In der Figur 4 ist ein Teil der erfindungsgemäßen Baureihe gezeigt. Die erfindungsgemäße Baureihe umfasst mindestens eine Baugröße, die jeweils zwei oder mehrere, voneinander verschiedene Varianten von Antrieben umfasst. Die Antriebe umfassen jeweils einen mindestens einen Klemmenkastenansatz aufweisenden Motor, beispielhaft gemäß Figur 1, 2 oder 3.

Innerhalb einer Baugröße sind je nach Variante verschiedene Aufsätze auf den Klemmenkastenaufsatz ausführbar. Somit wird für die Baureihe der zugrunde liegende Motor 1 bei verschiedenen Varianten, also mehrfach, eingesetzt. Wegen solchen Wiederverwendungen sind Lagerkosten und weitere Kosten reduziert und die Baureihe bietet bei großer Varianz und Flexibilität eine kostengünstige Lösung für vielfältige verschiedene Anwendungen

Innerhalb einer Baugröße ist eine erste Variante als Motor mit auf dem Klemmenkastenansatz montierten Motoranschlusskasten ausgeführt. Statt der Bezeichnung Motoranschlusskasten ist auch die Bezeichnung Klemmenkasten verwendbar. Der Motoranschlusskasten 42 übt Gehäusefunktion für die in seinem Inneren montierten Anschlusselemente für Versorgungs- und Signalleitungen aus. Diese Leitungen oder Kabel führen durch die Ausnehmungen 11 in der Gehäusewand des Motoranschlusskastens 42 hindurch, wobei diese Hindurchführungen dicht ausführbar mit PG-Verschraubungen oder anderen Dichtungen ist. Auch eine Ausführung mit einem in die Ausnehmungen 11 eingebauten Steckverbinderteil ist ausführbar. Der Motoranschlusskasten ist mit abgeschlossenem Gehäuse ausführbar und dient somit nicht zum Aufsetzen eines Umrichters, da ihm eine entsprechende mechanische und elektrische Schnittstelle dafür fehlt.

In der Figur 4 ist für diese erste Variante von Antrieben gezeigt, dass der Motoranschlusskasten 42 in verschiedenen Drehorientierungen montierbar ist. Somit ist je nach Anwendungsfall diejenige Orientierung fertigbar, bei welcher die Leitungen oder Kabel genügend Platz haben.

Bei einer zweiten Variante innerhalb einer Baugröße der Baureihe ist der Antrieb als Motor mit auf den Klemmenkastenansatz montierbarem Zwischenteil ausgeführt, mit welchem auch ein Umrichter zur Bildung eines Umrichtermotors verbindbar ist. Somit gehören zur zweiten Variante Umrichtermotoren gemäß den Figuren 1, 2 und 3 Je nach Anwendung ist nicht nur das Zwischenteil 3 geeignet orientierbar sondern auch die Art des Umrichters, die beispielsweise mittels der Leistungsklasse, der Speichergröße der elektronischen Schaltung, Mikrocontrollertyp oder verschiedene Software, insbesondere fest implementierte wie EEPROM-Software oder dergleichen. Somit ist der Antrieb äußerst flexibel anpassbar für die jeweilige Anwendung..

Bei weiteren erfindungsgemäßen Ausführungsbeispielen ist als Motor ein Asynchronmotor, ein Synchronmotor oder ein Reluktanzmotor einsetzbar. Alle haben jedoch einen Klemmenkastenansatz 12, dessen mechanische Schnittstelle zum Zwischenteil 3 oder Motoranschlusskasten 41 derart gleich ausgebildet ist, dass immer dasselbe Zwischenteil 3 oder derselbe Motoranschlusskasten 41 montierbar ist. Insbesondere ist gemäß Figur 1, 2 oder 3 ein Umrichter über das Zwischenteil verbindbar, der zur Regelung des entsprechenden Motors, also zur Regelung des Asynchronmotors, zur Regelung des Synchronmotors oder zur Regelung des Reluktanzmotors ausgeführt ist. Bei weiteren erfindungsgemäßen Ausführungsbeispielen ist ein Umrichter 2 eingesetzt, der ohne bauliche Veränderung für einen Asynchronmotor und alternativ für einen Synchronmotor zum Steuern und Regeln verwendbar ist. Somit sind die Lagerkosten enorm reduziert, da nur eine Sorte Umrichter für beide Motoren vorgehalten werden muss.

Bei weiteren erfindungsgemäßen Ausführungsbeispielen ist eine dritte Variante als Motor mit auf den Klemmenkastenansatz montierbarem Aufsatz ausgeführt, der eine elektrische und/oder elektronische Schaltung zur Ausführung mindestens einer Funktion umfasst. Diese Funktion ist eine Motorschalterfunktion, ein Sanftanlaufen, ein Bremsgleichrichter und/oder eine an verschiedenen Netzspannungen betreibbare elektronische Schaltung ist. Beispielhaft ist also ein Sanftanlaufgerät einsetzbar, das wiederum die zum Klemmenkastenansatz passende mechanische Schnittstelle hat, also beispielsweise eine quadratisch, gleichmäßig dreieckig, gleichmäßig vieleckig oder kreisrund ausgeführte Schnittstelle hat.

Weitere Varianten werden durch wiederum gedrehte Montage des Aufsatzes ausführbar, wodurch wiederum die Einsetzbarkeit für verschiedenste Anwendungen ermöglicht wird.

Eine Motorschalterfunktion ist durch einen oder mehrere elektromechanische Schalter, wie Relais oder dergleichen, und/oder durch elektronische Leistungsschalter, wie IGBT, Thyristor oder dergleichen, realisierbar. Insbesondere ist der Sternpunkt eines in Sternschaltung betriebenen Motors von solchen elektronischen Leistungsschaltern trenn- und schließbar. Ein Sanftanlaufen steuert oder regelt die Versorgung des Motors derart, dass beim Anlaufen nicht das volle Drehmoment vom Motor erzeugt wird. Ein Bremsgleichrichter dient zur Versorgung einer Gleichstrom-Bremse des Motors, insbesondere einer B-seitigen Einbau-oder Anbaubremse. Solch ein Bremsgleichrichter umfasst eine zur Gleichrichtung geeignet ausgeführte Schaltung, die aus einer oder mehreren Phasen der Versorgungsspannung eine unipolare Gleichspannung, also eine konstante, mit Restwelligkeit überlagerte Spannung, erzeugt. Durch eine geeignete Ausführung der elektronischen Schaltung ist solch ein Bremsgleichrichter auch an einem weiten Bereich von Versorgungsspannungen betreibbar und stellt damit eine an verschiedenen Netzspannungen betreibbare elektronische Schaltung dar. Insbesondere ist solch ein Bremsgleichrichter an einem deutschen und an USamerikanischen Netzen betreibbar.

Erfindungsgemäße Baureihen umfassen auch Baureihen, die nur erste und zweite, erste und dritte oder zweite und dritte und/oder weitere Varianten umfassen

Die Erfindung betrifft auch Umrichtermotoren und Baureihen von Antrieben, die sich durch geeignete Kombination der genannten Merkmalen ergeben.

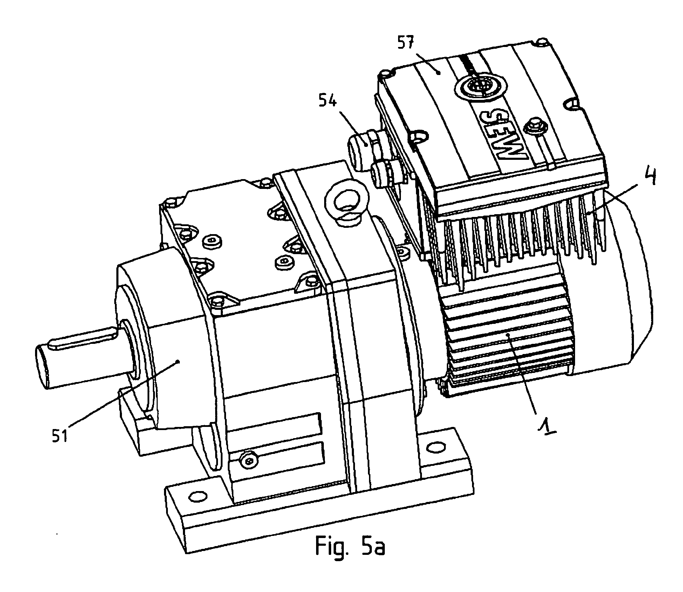

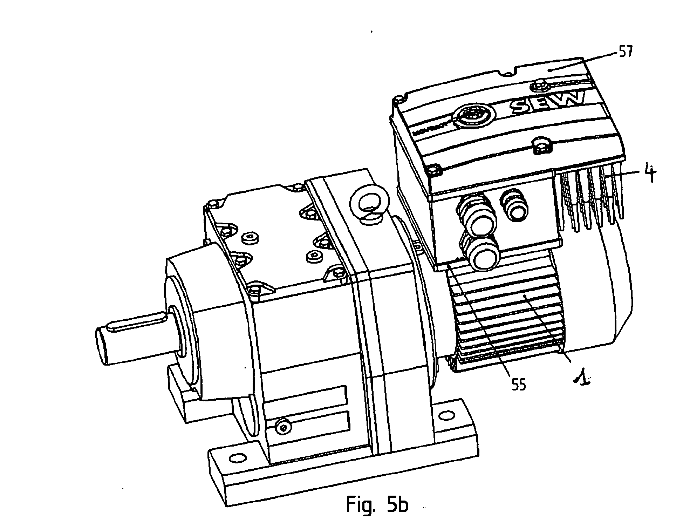

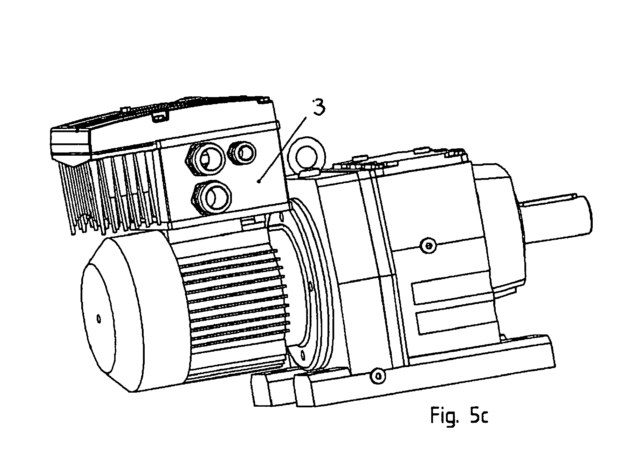

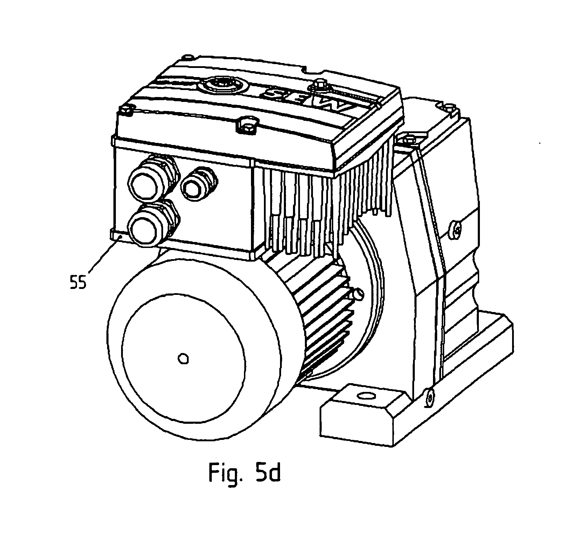

In den Figuren 5 bis 7 ist ein weiteres erfindungsgemäßes Ausführungsbeispiel gezeigt.

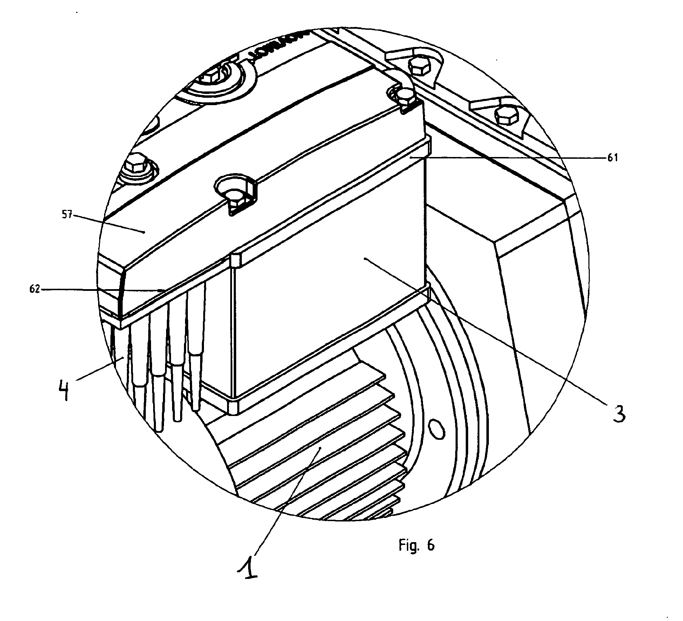

In den Figuren 5a, 5b, 5c und 5d ist das Getriebe 51 mit einem Motor 52 verbunden. Auf dem Motor 1 ist über eine Bodenplatte 55, ein Zwischenteil 3 und eine zweite Adapterplatte 61, die im vergrößerten als Figur 6 gezeigten Ausschnitt deutlicher zu sehen ist, ein Umrichter mit Kühlkörper 4 aufgesetzt. Das Zwischenteil weist an einer Seitenwand Kabelverschraubungen 54 auf, die in Bohrungen als Auslassungen vorgesehen sind. Der Kühlkörper 4 ragt seitlich heraus. Die Kabelverschraubungen 54 sind A-seitig, also von vorne, zugänglich sind

Mittels Drehung der Elemente Bodenplatte 55, Zwischenteil 3 und zweite Adapterplatte 61 um 90° oder ein Vielfaches hiervon sind weitere Ausführungsformen ohne Mehraufwand fertigbar. Somit ist eine Anpassung an die räumlichen Gegebenheiten der jeweiligen Anlage, in die der erfindungsgemäße Getriebemotor mit Umrichter eingebaut wird, vorhanden.

In der Figur 5b ragt der Kühlkörper B-seitig, also nach hinten, über. Dabei ist das Zwischenteil 3 um 90° gegenüber Figur 5a gedreht montiert, wobei die Kabelverschraubungen 54 nun seitlich zugänglich sind. Außerdem ist dabei auch die Bodenplatte um 90° gedreht wie auch das Zwischenteil 3 In der Figur 5b ragt der Kühlkörper B-seitig, also nach hinten, über.

In der Figur 5c ragt der Kühlkörper B-seitig, also nach hinten, über. Dabei ist das Zwischenteil 3 um 180° gegenüber Figur 5b gedreht montiert, wobei die Kabeiverschraubungen 54 auf der anderen Seite nun zugänglich sind. Die Bodenplatte 55 und die Adapterplatte 61 sind dabei nicht gedreht. In der Figur 5c ragt der Kühlkörper B-seitig, also nach hinten, wie auch bei der Figur 5b über.

In der Figur 5d ragt der Kühlkörper gegenüber der Figur 5a auf der anderen Seite über. Dabei ist das Zwischenteil 3 um 180° gegenüber Figur 5a ebenfalls gedreht montiert, wobei die Kabelverschraubungen 54 nicht mehr A-seitig sondern B-seitig zugänglich sind. Die Bodenplatte 55 ist dabei um 180° gedreht gegenüber der Figur 5a. Die Adapterplatte 61 ist relativ zum Zwischenteil 3 und Umrichter nicht gedreht.

In der Figur 6 ist ein vergrößerter Ausschnitt des Getriebemotors mit Umrichter gezeigt. Dabei ist die Dichtung 62 zwischen Deckel 57 des Umrichters und Kühlkörper 4 gezeigt Die .Dichtung 62 deckt auch die Verbindung des Deckels 57 und des Zwischenteils 3 ab. Jedoch ist dies in der Figur 6 nicht zu sehen, weil die Adapterplatte 61 außen derart überragt, dass die Dichtung in diesem Bereich verdeckt ist.

Bei weiteren erfindungsgemäßen Ausführungsbeispielen ist die Dichtung 62 auch als Wärmesperre ausgeführt, insbesondere nicht nur als Sperre für konvektiv transportierte Wärme sondern auch als Dämmung gegen Infrarotstrahlung.

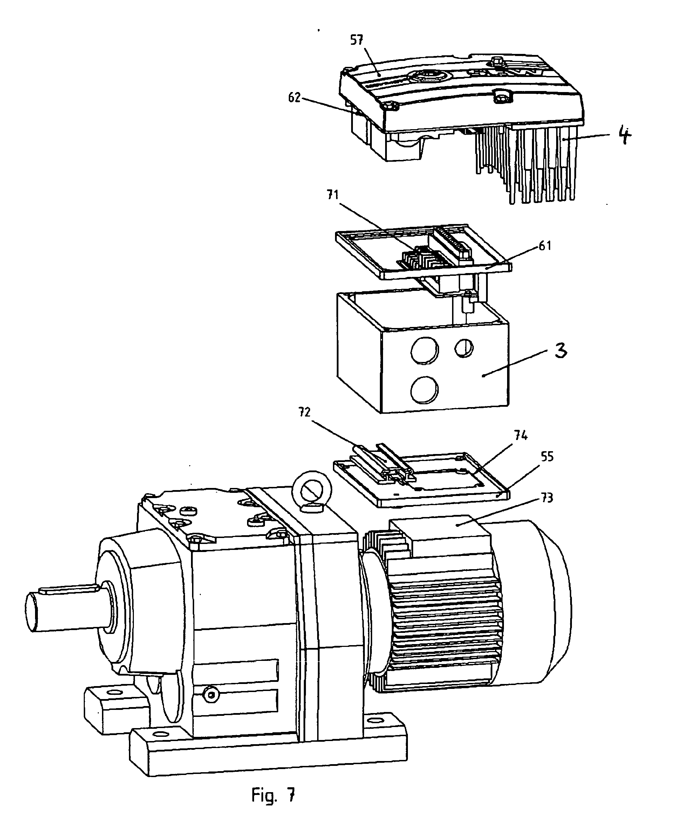

In der Figur 7 ist die Dichtung 62 unterhalb des Deckels 57 auch im Bereich neben dem Kühlkörper 4 gezeigt. Damit wird der Umrichter auf die zweite Adapterplatte 61 aufgesetzt, die einen rechteckigen Querschnitt aufweist und die Anschlussplatine 71 mit Steckverbinder umfasst. Das Zwischenteil 3 hat einen ebenfalls rechteckigen zugehörigen Querschnitt zur zweiten Adapterplatte 61 hin und auch zur Bodenplatte 55 hin. Die Bodenplatte 55 weist einen rechteckigen Querschnitt zum Zwischenteil 3 hin auf und ist derart gestaltet, dass je nach Kundenwunsch verschiedene elektronische Optionen einbaubar sind. Die Bodenplatte 55 weist zum Motor 1 hin eine quadratische Auslassung 74 auf und ist somit dicht und lösbar verbindbar mit dem quadratischen Klemmenkastenansatz 73 des Motors 1.

Mittels der quadratischen Verbindung zwischen Bodenplatte 55 und Motor 1 ist ein um 90° oder ein Vielfaches hiervon verdrehtes Montieren der Bodenplatte 55 gegenüber dem Motor 52 ausführbar. Mittels der rechteckigen Ausführung des Zwischenteils 3 und der Verbindung zum Umrichter hin, umfassend die zweite Adapterplatte 61, ist ein relativ verdrehtes Montieren des Zwischenteils 3 zum Umrichter hin um 180° ermöglicht Somit lassen sich verschiedenste Kombinationen erreichen.

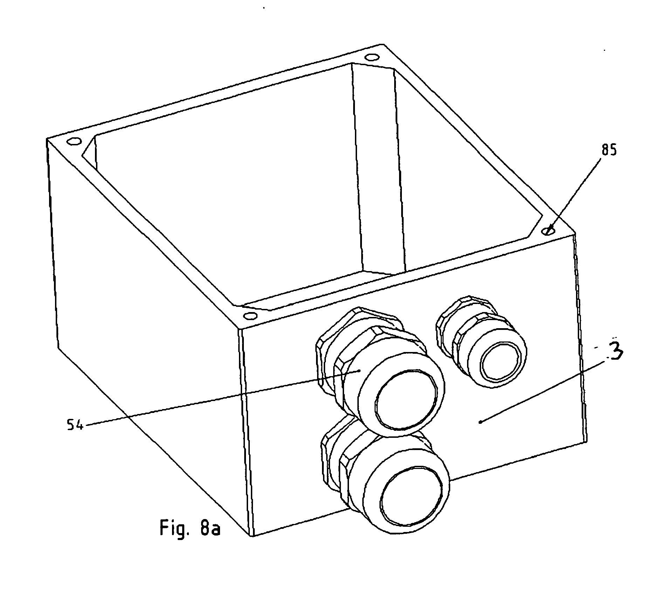

Figur 8a zeigt das zwischenteil 3, das Kabelverschraubungen 54 aufweist und Gewindebohrungen 85 zur lösbaren Verbindung mit dem Umrichter umfasst.

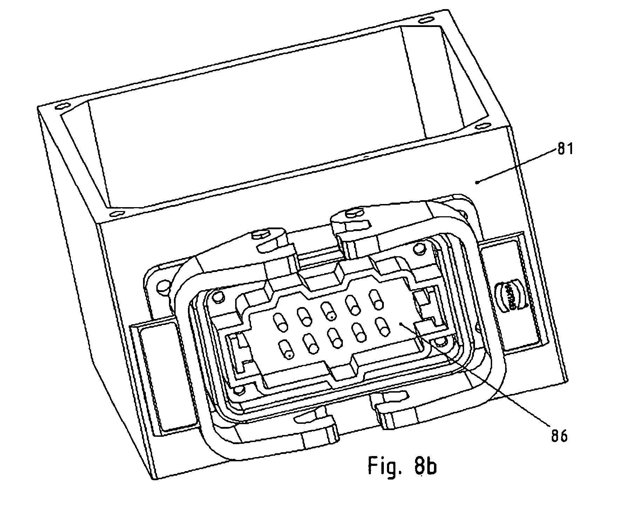

Figur 8b zeigt ein anderes ebenfalls vorteilhaft verwendbares Zwischenteil 3, das einen schweren Steckverbinder umfasst.

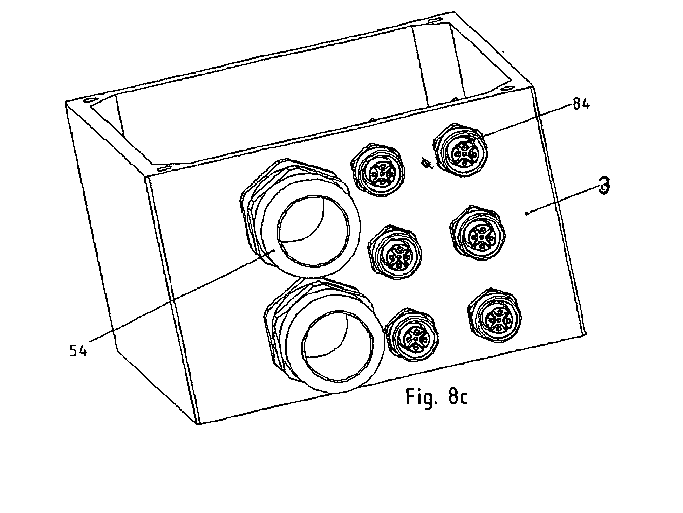

Figur 8c zeigt ein anderes ebenfalls vorteilhaft verwendbares Zwischenteil 3, das Kabelverschraubungen 54 und M12 - Steckverbinder 84 umfasst.

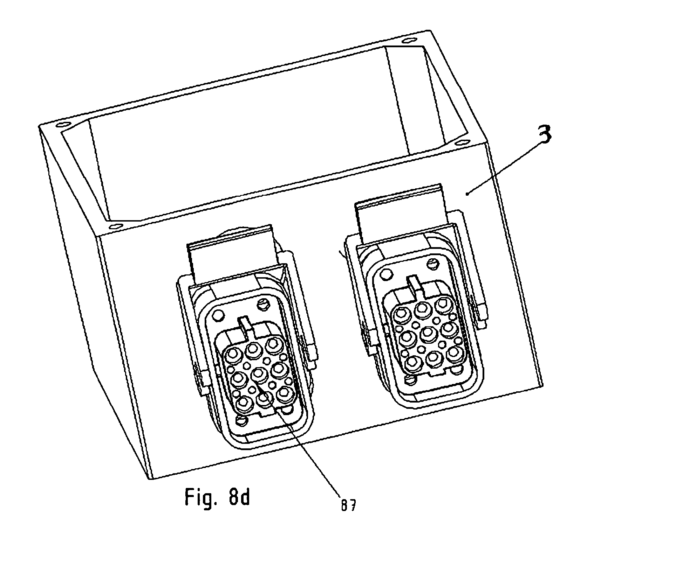

Figur 8d zeigt ein anderes ebenfalls vorteilhaft verwendbares Zwischenteil 3, das zwei Rechteck-Steckverbinder 87 umfasst.

Innerhalb einer Baugröße der Baureihe von Umrichtermotoren sind also je nach Kundenwunsch verschiedene Zwischenteile mit verschiedenen Steckverbindern und/oder anderen Kabeleingänge verwendbar. Somit können Energie- und/oder Informationsleitungen angeschlossen werden und der Umrichtermotor ist schnell und einfach elektrisch trenn- oder verbindbar.

Statt der rechteckigen Verbindungen sind bei weiteren erfindungsgemäßen Ausführungsbeispielen auch quadratische oder andere Geometrien vorteilhaft verwendbar. Je nach Geometrie sind sogar mehr oder beispielsweise bei kreisförmiger Ausbildung unendlich viele Verdrehorientierungen realisierbar.

Ein einfaches und kostengünstiges weiteres erfindungsgemäßes Ausführungsbeispiel ist beispielsweise durch Verwendung eines quadratischen Zwischenteils zusammen mit einer quadratischen Schnittstelle zum Umrichter hin ausführbar. Somit sind die Bodenplatte und/oder Adapterplatte einsparbar oder höchstens zum Einbau der elektrischen oder elektronischen Teile, wie beispielsweise Steckverbinder, notwendig.

Bei weiteren erfindungsgemäßen Ausführungsbeispielen sind in dieser vorliegenden Schrift genannte rechteckige Ausformungen als quadratische Ausformungen ausgeführt. Bei solchen Ausführungsbeispielen werden weitere Vorteile bezüglich der erhöhten Flexibilität wirksam, da weitere Komponenten und/oder Teile nicht nur 180° Drehsymmetrie sondern sogar 90° Drehsymmetrie aufweisen

### Bezugszeichenliste

- 1: Motor
- 2: Umrichter
- 3: Zwischenteil
- 4: Kühlkörper
- 5: Stecker
- 6: Buchse
- 7: Klemmbrett
- 8: Elektrische Leitungen
- 9: Baugruppen
- 10: Adapterplatte
- 11: Ausnehmungen
- 12: Klemmenkastenansatz
- 13.: Rotor

- 42: Motoranschlusskasten

- 51: Getriebe

- 54: Kabelverschraubung
- 55: Bodenplatte, quadratisch

- 57: Deckel

- 61: zweite Adapterplatte, rechteckig
- 62: Dichtung
- 71: Anschlussplatine mit Steckverbinder
- 72: Elektronische Optionen
- 73: Klemmenkastenansatz, quadratisch
- 74: quadratische Ausnehmung

- 84: Steckverbinder
- 85: Gewindebohrung
- 86: schwererer Steckverbinder (M12)
- 87: Rechteck-Steckverbinder

## Patentansprüche

1. Umrichtermotor, umfassend einen Motor (1), mindestens ein Zwischenteil (3) und einen Umrichter (2),
**dadurch gekennzeichnet, dass**
der Umrichter (2) Signalelektronik, Leistungselektronik und mindestens einen Kühlkörper (4) umfasst,
und wobei der Umrichter (2) mindestens über das Zwischenteil (3) mit dem Motor (1) mechanisch verbunden ist,
wobei der Umrichter (2) ein erstes Steckverbinderteil (5) aufweist zur Verbindung mit einem weiteren Steckverbinderteil (6), das elektrisch mit den Statorwicklungen des Motors (1) verbindbar ist,
und wobei das Zwischenteil (3) mindestens in einer ersten Richtung orientierte Ausnehmungen (11) zur Durchleitung von elektrischen Leitungen umfasst,
und wobei die mechanische Schnittstelle zwischen Motor (1) und Zwischenteil (3) und zwischen Zwischenteil (3) und Umrichter (2, 57) so gestaltet ist, dass das Zwischenteil (3) mit seinen Ausnehmungen (11) jeweils in mindestens zwei Orientierungen montierbar ist.

2. Umrichtermotor, umfassend einen Motor(1), mindestens ein Zwischenteil (3), eine Bodenplatte (55) und einen Umrichter (2),
**dadurch gekennzeichnet, dass**
der Umrichter (2) Signalelektronik, Leistungselektronik und mindestens einen Kühlkörper (4, 53) umfasst,
und die Bodenplatte ,(55) zur Aufnahme verschiedener elektrischer und/oder elektronischer Optionen (9) ausgeführt ist,
und wobei der Umrichter (2, 57) mindestens über das Zwischenteil (3) und die Bodenplatte (55) mit dem Motor (1, 52) mechanisch verbunden ist,
und wobei das Zwischenteil (3) mindestens in einer ersten Richtung orientierte Ausnehmungen (11) zur Durchleitung von elektrischen Leitungen umfasst,
und wobei die Bodenplatte, (55) zum Zwischenteil (3) hin eine Schnittstelle aufweist, die eine andere Drehsymmetrie aufweist als die ebenfalls von der Bodenplatte (55) umfasste Schnittstelle zum Motor (1) hin,
und das Zwischenteil (3) mit seinen Ausnehmungen (11) auf der Bodenplatte (55) in mindestens zwei verschiedenen Orientierungen montierbar ist..

3. Umrichtermotor nach einem der vorangegangenen Ansprüche,
**dadurch gekennzeichnet, dass**
die erste Richtung eine Querrichtung, insbesondere quer zur Rotorachse, oder eine Längsrichtung, insbesondere in Rotorachsenrichtung, ist
und/oder
die Orientierungen, in welchen das Zwischenteil (3) montierbar ist, mittels einer Drehung ineinander übergehen und/oder ineinander überführbar sind.

4. Umrichtermotor nach einem der vorangegangenen Ansprüche, 2 oder 3,
**dadurch gekennzeichnet, dass**
das Zwischenteil (3) motorseitig und umrichterseitig quadratisch oder kreisrund ausgebildet ist
oder dass die mechanische Schnittstelle des Umrichters (2, 57) zum Zwischenteil (3) und das Zwischenteil (3) rechteckig ausgebildet ist und zum Motor (1) hin eine über mindestens der Bodenplatte (55) mit dem Klemmenkastenansatz (12, 73) des Motors (1) verbindbar ist.

5. Umrichtermotor nach einem der vorangegangenen Ansprüche,
**dadurch gekennzeichnet, dass**
das mindestens einen Kühlkörper (4) umfassende Gehäuse des Umrichters 2 das Zwischenteil (3) in mindestens einer Richtung überragt, die senkrecht zu einer Elemente des Motors (1) und Elemente des Umrichters (2) verbindenden mathematischen Achse gerichtet ist.

6. Umrichtermotor nach einem der vorangegangenen Ansprüche,
**dadurch gekennzeichnet, dass**
von einer Platte aus, wie eine Adapterplatte (10, 61) oder eine Bodenplatte (55), betrachtet, motorseitig und/oder umrichterseitig mindestens eine Wärmesperre vorgesehen ist, insbesondere innerhalb des Zwischenteils (3) und/oder Klemmenkastenansatzes (12, 73)..

7. Umrichtermotor nach einem der vorangegangenen Ansprüche, 2 bis 6,
**dadurch gekennzeichnet, dass**
die Schnittstelle vom Zwischenteil (3) zum Umrichter (2) hin eine andere diskrete Drehsymmetrie aufweist als die mindestens eine Bodenplatte (55) umfassende Schnittstelle vom Zwischenteil (3) zum Motor (1) hin.

8. Umrichtermotor nach einem der vorangegangenen Ansprüche, 2 bis 7,
**dadurch gekennzeichnet, dass**
das Zwischenteil (3) mit dem Umrichter (2) über eine zweite Adapterplatte (61) verbindbar ist und/oder
dass das Zwischenteil (3) mit dem Motor (1, 52) über eine Bodenplatte (55) verbindbar ist..

9. Umrichtermotor nach einem der vorangegangenen Ansprüche,
**dadurch gekennzeichnet, dass**
die zweite Adapterplatte (61) elektronische Baugruppen und/oder einen Steckverbinder (71) zur elektrischen Verbindung mit dem Umrichter (2) umfasst
und/oder dass die Bodenplatte (55) zur Aufnahme verschiedener elektrischer und/oder elektronischer Optionen (72) ausgeführt ist oder innerhalb einer Baugröße einer Baureihe von Umrichtermotoren auswählbar ist.

10. Umrichtermotor nach einem der vorangegangenen Ansprüche,
**dadurch gekennzeichnet, dass**
die Bodenplatte (55) zum Zwischenteil (3) hin eine Schnittstelle aufweist, die eine andere Drehsymmetrie aufweist als die ebenfalls von der Bodenplatte (55) umfasste Schnittstelle zum Motor (1) hin.

11. Umrichtermotor nach einem der vorangegangenen Ansprüche,
**dadurch gekennzeichnet, dass**
die mechanischen Schnittstellen vom Zwischenteil (3) zum Umrichter (2) und Motor (1) jeweils dieselbe diskrete oder kontinuierliche Drehsymmetrie zur selben Drehachse aufweisen.

## Claims

1. Converter motor, comprising a motor (1), at least one intermediate part (3) and a converter (2),
**characterised in that**
the converter (2) comprises signal electronics, power electronics and at least one cooling body (4),
and wherein the converter (2) is mechanically connected to the motor (1) at least via the intermediate part (3),
wherein the converter (2) has a first plug-in connector part (5) for connection to a further plug-in connector part (6), which is electrically connectable to the stator windings of the motor (1),
and wherein the intermediate part (3) comprises cutouts (11), oriented at least in a first direction, for leading through electrical lines,
and wherein the mechanical interface between motor (1) and intermediate part (3) and between intermediate part (3) and converter (2, 57) is configured such that the intermediate part (3) is mountable with its cutouts (11) in each case in at least two orientations.

2. Converter motor, comprising a motor (1), at least one intermediate part (3), a base plate (55) and a converter (2),
**characterised in that**
the converter (2) comprises signal electronics, power electronics and at least one cooling body (4, 53),
and the base plate (55) is designed to receive different electrical and/or electronic options (9),
and wherein the converter (2, 57) is mechanically connected to the motor (1, 52) at least via the intermediate part (3) and the base plate (55),
and wherein the intermediate part (3) comprises cutouts (11), oriented at least in a first direction, for leading through electrical lines,
and wherein the base plate (55) has an interface towards the intermediate part (3), which interface has a different rotational symmetry from the interface, likewise comprised by the base plate (55), towards the motor (1),
and the intermediate part (3) is mountable on the base plate (55) with its cutouts (11) in at least two different orientations.

3. Converter motor according to one of the preceding claims,
**characterised in that**
the first direction is a transverse direction, in particular transversely to the rotor axis, or a longitudinal direction, in particular in the direction of the rotor axis,
and/or
the orientations in which the intermediate part (3) is mountable merge into one another and/or are transformable into one another by means of a rotation.

4. Converter motor according to one of the preceding Claims 2 or 3,
**characterised in that**
the intermediate part (3) is of square or circular shape on the motor side and the converter side or **in that** the mechanical interface of the converter (2, 57) to the intermediate part (3) and the intermediate part (3) is of rectangular shape and towards the motor (1) an [interface] is connectable via at least the base plate (55) to the terminal box attachment (12, 73) of the motor (1).

5. Converter motor according to one of the preceding claims,
**characterised in that**
the housing of the converter (2) comprising at least one cooling body (4) projects over the intermediate part (3) in at least a direction which is directed perpendicular to a mathematical axis connecting elements of the motor (1) and elements of the converter (2).

6. Converter motor according to one of the preceding claims,
**characterised in that**
viewed from a plate, such as an adapter plate (10, 61) or a base plate (55), on the motor side and/or the converter side at least one thermal barrier is provided, in particular inside the intermediate part (3) and/or terminal box attachment (12, 73).

7. Converter motor according to one of the preceding Claims 2 to 6,
**characterised in that**
the interface from the intermediate part (3) towards the converter (2) has a different discrete rotational symmetry from the interface, comprising at least one base plate (55), from the intermediate part (3) towards the motor (1).

8. Converter motor according to one of the preceding Claims 2 to 7,
**characterised in that** the intermediate part (3) is connectable to the converter (2) via a second adapter plate (61) and/or
**in that** the intermediate part (3) is connectable to the motor (1, 52) via a base plate (55).

9. Converter motor according to one of the preceding claims,
**characterised in that**
the second adapter plate (61) comprises electronic assemblies and/or a plug-in connector (71) for electrical connection to the converter (2)
and/or **in that** the base plate (55) is designed to receive different electrical and/or electronic options (72) or is selectable within one size of a series of converter motors.

10. Converter motor according to one of the preceding claims,
**characterised in that**
the base plate (55) has towards the intermediate part (3) an interface which has a different rotational symmetry from the interface, likewise comprised by the base plate (55), towards the motor (1).

11. Converter motor according to one of the preceding claims,
**characterised in that**
the mechanical interfaces from the intermediate part (3) to the converter (2) and motor (1) each have the same discrete or continuous rotational symmetry with respect to the same axis of rotation.

## Revendications

1. Moteur à convertisseur, comprenant un moteur (1), au moins une partie intercalaire (3) et un convertisseur (2),
**caractérisé par le fait que**
le convertisseur (2) inclut une électronique de signaux, une électronique de puissance et au moins un corps de refroidissement (4),
et ledit convertisseur (2) est relié mécaniquement au moteur (1), au moins par l'intermédiaire de la partie intercalaire (3),
sachant que ledit convertisseur (2) présente une première pièce (5) de connexion enfichable, en vue de la jonction avec une autre pièce (6) de connexion enfichable pouvant être raccordée électriquement aux enroulements statoriques dudit moteur (1), sachant que ladite partie intercalaire (3) comporte des évidements (11) orientés au moins dans une première direction, dévolus au passage de conducteurs électriques,
et sachant que l'interface mécanique entre ledit moteur (1) et ladite partie intercalaire (3), et entre ladite partie intercalaire (3) et ledit convertisseur (2, 57), est conçu de telle sorte que ladite partie intercalaire (3) puisse être respectivement montée de façon que ses évidements (11) pointent dans au moins deux orientations.

2. Moteur à convertisseur, comprenant un moteur (1), au moins une partie intercalaire (3), une plaque de fond (55) et un convertisseur (2),
**caractérisé par le fait que**
le convertisseur (2) inclut une électronique de signaux, une électronique de puissance et au moins un corps de refroidissement (4, 53),
et la plaque de fond (55) est agencée afin de recevoir différentes options (9) électriques et/ou électroniques,
sachant que ledit convertisseur (2, 57) est relié mécaniquement au moteur (1, 52), au moins par l'intermédiaire de la partie intercalaire (3) et de la plaque de fond (55),
sachant que ladite partie intercalaire (3) comporte des évidements (11) orientés au moins dans une première direction, dévolus au passage de conducteurs électriques,
et sachant que ladite plaque de fond (55) présente, en direction de ladite partie intercalaire (3), un interface offrant une symétrie de rotation autre que celle de l'interface qui pointe vers le moteur (1) et est pareillement inclus par ladite plaque de fond (55),
et que ladite partie intercalaire (3) peut être montée, sur ladite plaque de fond (55), de façon que ses évidements (11) pointent dans au moins deux orientations différentes.

3. Moteur à convertisseur selon l'une des revendications précédentes, **caractérisé par le fait que**
la première direction est une direction transversale, notamment transversale à l'axe du rotor, ou une direction longitudinale suivant notamment la direction dudit axe du rotor, et/ou
les orientations, dans lesquelles la partie intercalaire (3) peut être montée, fusionnent mutuellement et/ou peuvent être mutuellement confondues par accomplissement d'une rotation.

4. Moteur à convertisseur selon l'une des revendications 2 ou 3 précédentes, **caractérisé par le fait**
**que** la partie intercalaire (3) est de réalisation carrée ou circulaire, côté moteur et côté convertisseur,
ou que l'interface mécanique du convertisseur (2, 57) pointant vers la partie intercalaire (3), et ladite partie intercalaire (3), sont de réalisation rectangulaire et peuvent être raccordés en direction du moteur (1), par l'intermédiaire d'au moins la plaque de fond (55), à l'embase de la boîte de connexions (12, 73) dudit moteur (1).

5. Moteur à convertisseur selon l'une des revendications précédentes, **caractérisé par le fait que**
le boîtier du convertisseur (2) comprenant au moins un corps de refroidissement (4) fait saillie, au-delà de la partie intercalaire (3), dans au moins une direction orientée perpendiculairement à un axe mathématique reliant des éléments du moteur (1), et des éléments dudit convertisseur (2).

6. Moteur à convertisseur selon l'une des revendications précédentes, **caractérisé par le fait**
**qu'**au moins une barrière thermique est prévue côté moteur et/ou côté convertisseur, en considérant à partir d'une plaque telle qu'une plaque adaptatrice (10, 61) ou une plaque de fond (55), notamment à l'intérieur de la partie intercalaire (3) et/ou de l'embase de la boîte de connexions (12, 73).

7. Moteur à convertisseur selon l'une des revendications 2 à 6 précédentes, **caractérisé par le fait que**
l'interface de la partie intercalaire (3), pointant vers le convertisseur (2), offre une symétrie de rotation discrète autre que celle de l'interface que ladite partie intercalaire (3) présente en direction du moteur (1), et qui inclut au moins une plaque de fond (55).

8. Moteur à convertisseur selon l'une des revendications 2 à 7 précédentes, **caractérisé par le fait**
**que** la partie intercalaire (3) peut être reliée au convertisseur (2) par l'intermédiaire d'une seconde plaque adaptatrice (61), et/ou
**que** ladite partie intercalaire (3) peut être reliée au moteur (1, 52) par l'intermédiaire d'une plaque de fond (55).

9. Moteur à convertisseur selon l'une des revendications précédentes, **caractérisé par le fait**
**que** la seconde plaque adaptatrice (61) inclut des groupes de composants électroniques et/ou un connecteur enfichable (71) dédié à la jonction électrique avec le convertisseur (2),
et/ou que la plaque de fond (55) est agencée afin de recevoir différentes options (72) électriques et/ou électroniques, ou peut être sélectionnée au sein d'une taille de réalisation d'une gamme de moteurs à convertisseurs.

10. Moteur à convertisseur selon l'une des revendications précédentes, **caractérisé par le fait que**
la plaque de fond (55) présente, en direction de la partie intercalaire (3), un interface offrant une symétrie de rotation autre que celle de l'interface qui pointe vers le moteur (1) et est pareillement inclus par ladite plaque de fond (55).

11. Moteur à convertisseur selon l'une des revendications précédentes, **caractérisé par le fait que**
les interfaces mécaniques de la partie intercalaire (3), en direction du convertisseur (2) et du moteur (1), offrent respectivement la même symétrie de rotation, discrète ou continue, vis-à-vis du même axe de rotation.
